# EUROPÄISCHE PATENTSCHRIFT

(11) **EP 0 594 038 B1**
(45) Veröffentlichungstag und Bekanntmachung des Hinweises auf die Patenterteilung: **02.01.1997**
(21) Anmeldenummer: 93116484.2
(22) Anmeldetag: 12.10.1993
(51) Int. Cl.: C08L 61/24

(54) **Wässrige Harnstoff-Formaldehyd-Harze**
Aqueous urea-formaldehyde resins
Résines urée-formaldéhyde aqueuses

(30) Priorität: 20.10.1992 DE 4235327
(43) Veröffentlichungstag der Anmeldung: 27.04.1994
(73) Patentinhaber: BASF Aktiengesellschaft, 67063 Ludwigshafen (DE)
(72) Erfinder: Hittinger, Christel, Dr., D-6800 Mannheim 24 (DE); Lehmann, Gunter, D-6701 Birkenheide (DE); Niessner, Manfred, Dr., D-6707 Schifferstadt (DE); Denzinger, Walter, D-6720 Speyer (DE); Hartmann, Heinrich, Dr., D-6703 Limburgerhof (DE)

(56) Entgegenhaltungen:
- EP-A- 0 150 420
- GB-A- 1 470 953
- US-A- 4 917 764

## Beschreibung

Die vorliegende Erfindung betrifft neue wäßrige Harnstoff-Fomaldehyd-Harze, welche erhältlich sind durch Kondensation von Harnstoff und Formaldehyd bei einem Molverhältnis von 1:1,9 bis 1:2,5 im sauren Medium in Gegenwart von 0,05 bis 2 Gew.-%, bezogen auf die Gesamtmenge an eingesetztem Harnstoff und Formaldehyd, von Di- oder Polycarbonsäuren, welche teilweise oder vollständig neutralisiert sein können.

Weiterhin betrifft die Erfindung ein Verfahren zur Herstellung solcher Harze sowie ihre Verwendung zur Herstellung von lignocellulosehaltigen Formkörpern.

Bei der Herstellung herkömmlicher Harnstoff-Formaldehyd-Harze erfolgt zunächst im neutralen pH-Bereich eine Methylolierung des Harnstoffs durch Umsetzung mit einem Formaldehyd-Überschuß in wäßriger Lösung. Anschließend wird durch Zugabe von Mineralsäuren wie Schwefelsäure oder von Ameisensäure der pH-Wert in den sauren Bereich abgesenkt und dann bis zum gewünschten Kondensationsgrad kondensiert (vgl. auch "Ullmann's Encyklopädie der technischen Chemie", 4. Auflage, Bd. 7, S. 412, 2. Spalte).

Solche Harnstoff-Formaldehyd-Leimharze sind als Bindemittel für Spanplatten sehr weit verbreitet. Die Hauptanwendung solcher Spanplatten liegt im Innenausbau und bei Möbeln. Der Vorteil dieser Harze ist ihr relativ niedriger Preis. Der Nachteil besteht in der Abgabe von Formaldehyd aus den fertigen Platten. Durch eine Verringerung des Formaldehyd-Gehaltes in den Leimen kann zwar der vom Gesetzgeber festgelegte Grenzwert der Formaldehyd-Emission eingehalten werden, aber gleichzeitig verschlechtern sich andere wichtige Eigenschaften: die Festigkeit der Spanplatten nimmt ab, ihre Beständigkeit gegen Wasser verschlechtert sich und die Aushärtungsgeschwindigkeit, und damit auch die Verarbeitungsgeschwindigkeit, nehmen ab.

Es ist bekannt, daß man durch die Zugabe gewisser Substanzen zu den Leimharzen, sei es bereits während der Harzherstellung oder auch beim Einbringen des Härters direkt vor der Verarbeitung, einige dieser Nachteile aufheben kann.

Besonders weit verbreitet ist Melamin als Komponente in Harnstoff-Formaldehyd-Leimharzen, was zu einer besseren Qualität der Spanplatten führt. Die Herstellung solcher Leimharze bringt jedoch einen erheblichen Mehraufwand mit sich, besonders, weil Melamin als Feststoff gehandhabt werden muß. Wie in der DE-OS 40 11 159 beschrieben wird, muß das Melamin zu einem Vorkondensat mit Harnstoff und Formaldehyd umgesetzt werden. Dieses Vorkondensat wird schließlich bei der Herstellung des verbesserten Harzes eingesetzt. Die Qualität der daraus hergestellten Spanplatten ist zwar im Vergleich zu einem unmodifizierten Harnstoff-Formaldehyd-Leimharz verbessert, gleichzeitig verlängert sich aber die Gelierzeit des Melamin-modifizierten Harzes erheblich, und durch den höheren Preis des Melamins verteuert sich das Produkt zusätzlich.

Es ist auch möglich, die Qualität der Produkte durch Einkondensieren von Harnstoff-Derivaten zu verbessern, beispielsweise durch Einkondensieren von Umsetzungsprodukten aus Harnstoff und Di- oder Triaminen, sogenannten Polyharnstoffen (vgl. R.O. Ebewele, G.E. Meyers, B.H. River, S.A. Kontsky, Journal of Applied Polymer Science, Vol. 47, 2997-3012 (1991)). Diese Methode ist allerdings relativ aufwendig und kostspielig.

Weiterhin ist aus der DE-OS 34 00 669 bekannt, wäßrige Lösungen von Diammoniumsalzen einer Mischung von aliphatischen, gesättigten Dicarbonsäuren, wie sie bei der Cyclohexanonoxidation anfällt, als Härterlösungen für Aminoplastharze zu verwenden.

Aufgabe der vorliegenden Erfindung war es, Harnstoff-Formaldehyd-Harze zu finden, die zur Herstellung von Spanplatten mit niedriger Formaldehydemission geeignet sind und dabei eine verbesserte Wasserbeständigkeit und gute mechanische Eigenschaften aufweisen.

Demgemäß wurden die eingangs definierten wäßrigen Harnstoff-Formaldehyd-Harze gefunden.

Die erfindungsgemäßen Harze lassen sich nach einem mehrstufigen Verfahren herstellen. Dabei erfolgt zunächst in an sich bekannter Weise eine Methylolierung des Harnstoffs durch Umsetzung mit einer wäßrigen Formaldehyd-Lösung bei einem Molverhältnis von Harnstoff zu Formaldehyd im Bereich von 1:1,9 bis 1:2,5, vorzugsweise 1:2,0 bis 1:2,3. Die Methylolierung wird üblicherweise in einem pH-Bereich von 6,5 bis 8,0 durchgeführt. Die Einstellung des geeigneten pH-Wertes kann mit wäßrigen Basen, beispielsweise 25 gew.-%iger wäßriger Natronlauge, erfolgen.

Der Formaldehyd wird im allgemeinen in wäßriger Lösung eingesetzt, beispielsweise in 40 gew.-%iger wäßriger Lösung.

Harnstoff wird meist ebenfalls in wäßriger Lösung eingesetzt, beispielsweise in einer 68 gew.-%igen Lösung. Es ist aber auch möglich, den Harnstoff in fester Form einzusetzen.

Bei der Methylolierung können auch Vorkondensate eingesetzt werden, die z.B. aus Formaldehyd und Harnstoff im Molverhältnis von 4:1 erhältlich sind.

Die Methylolierung wird üblicherweise unter Normaldruck bei Temperaturen von 80 bis 100°C während einer Zeitspanne von 15 bis 30 min. durchgeführt.

Im Anschluß an die Methylolierung des Harnstoffs erfolgt die Kondensation. Kondensiert wird im saurem Medium bei pH-Werten von 3 bis 6, vorzugsweise von 4 bis 5.

Erfindungsgemäß wird die Kondensation in Gegenwart von Di- oder Polycarbonsäuren durchgeführt, welche ganz oder teilweise neutralisiert sein können.

Als Di- oder Polycarbonsäuren kommen aliphatische Verbindungen mit 4 bis 14, vorzugsweise 6 bis 12 C-Atomen in Betracht, beispielsweise gesättigte Dicarbonsäuren wie Adipinsäure, Pimelinsäure, Korksäure, Azelainsäure oder Sebacinsäure oder Oxy-säuren wie 2,2'-Oxy-diessigsäure (Diglykolsäure), ebenso Hydroxycarbonsäuren mit zwei oder drei Carboxylgruppen wie Apfelsäure, Weinsäure oder Citronensäure.

Weiterhin kommen einkernige aromatische Di- oder Tricarbonsäuren wie Phthalsäure, Isophthalsäure, Terephthalsäure oder Trimellitsäure in Betracht.

Ebenfalls geeignet sind erfindungsgemäß polymere Polycarbonsäuren mit einem mittleren Molekulargewicht Mn von 1.000 bis 200.000, vorzugsweise von 300 bis 150.000. Solche polymeren Polycarbonsäuren können Homo-oder Copolymere von monoolefinisch ungesättigten C₃-C₅-Carbonsäuren wie Acrylsäure, Methacrylsäure, Maleinsäure, Itaconsäure, Crotonsäure, Fumarsäure oder Maleinsäurehalbestern wie Maleinsäuremonomethylester.

Weiterhin können Copolymere der oben genannten monomeren olefinisch ungesättigten Säuren mit deren Estern oder Amiden verwendet werden, beispielsweise mit Acrylamid, Methylacrylamid, Acrylsäuremethylester, Acrylsäurebutylester.

Außerdem können Copolymere aus den oben genannten monomeren olefinisch ungesättigten Carbonsäuren und Olefinen wie iso-Buten, Diisobuten, Ethylen oder Propylen, Vinylethern wie Vinylethylether, Vinylmethylether, Vinyl-n-butylether oder Vinylestern wie Vinylacetat, Vinylformiat, Vinylbenzoat, Vinylpropionat verwendet werden.

Geeignete Copolymere weisen einen Anteil von mindestens 10 Gew.-%, bezogen auf die Gesamtmonomerenmenge, an monoolefinisch ungesättigten Carbonsäuren als Monomere auf. Bevorzugt beträgt die Menge der carboxylgruppenhaltigen Monomere 20 bis 100 Gew.-% der Gesamtmonomerenmenge. Ansonsten ist die Monomerenzusammensetzung unkritisch.

Besonders geeignete polymere Polycarbonsäuren sind beispielsweise wasserquellbare Copolymere aus Ammoniumacrylat und Acrylamid im Verhältnis 9:1, das Natriumsalz eines Copolymers aus Maleinsäure und einem C₂₀₋₂₄-Olefin im Verhältnis 1:1 mit einer Molmasse von ca. 5.000, wasserlösliche Polyacrylsäure mit einem Molgewicht von ca. 150.000 oder ein Copolymer aus Acrylsäure und Maleinsäure im Verhältnis 1:1 mit einer Molmasse von ca. 3.000.

Die erfindungsgemäß verwendeten Di- oder Polycarbonsäuren können sowohl in fester Form als auch in Form wäßriger Lösungen zugegeben werden.

Die genannten monomeren oder polymeren Di- oder Polycarbonsäuren können auch vollständig oder teilweise neutralisiert eingesetzt werden. Dazu können sie in wäßriger Lösung durch Zugabe einer Base, vorzugsweise einer wäßrigen Base, bis zu dem gewünschten Grad neutralisiert werden. Als Basen kommen Ammoniak, gesättigte Amine oder Alkanolamine wie beispielsweise Triethanolamin, Alkalihydroxide wie Natriumhydroxid oder Caliumhydroxid oder Erdalkalihydroxide wie Magnesiumhydroxid oder Calciumhydroxid in Betracht.

Es ist auch möglich, die vollständig oder teilweise neutralisierten Di- oder Polycarbonsäuren in Form ihrer Salze oder Mischungen aus Säure und Salz in fester Form zu dem Reaktionsgemisch zu geben. Als Salze kommen dabei die entsprechenden Ammoniumsalze, die Alkalisalze, vorzugsweise Natrium- oder Kaliumsalze, oder die Erdalkalisalze, vorzugsweise Magnesium- oder Calciumsalze in Betracht.

Vorzugsweise werden die erfindungsgemäß verwendeten Di- oder Polycarbonsäuren in ihrer Säureform verwendet.

Die Di- oder Polycarbonsäuren werden dem Reaktionsgemisch in Mengen von 0,05 bis 2 Gew.-%, vorzugsweise von 0,1 bis 1,5 Gew.-%, besonders bevorzugt von 0,2 bis 1 Gew.-%, bezogen auf die Gesamtmenge an eingesetztem Harnstoff und Formaldehyd zugegeben.

Die Zugabe der Di- oder Polycarbonsäure erfolgt vorzugsweise nach Beendigung der Methylolierung. Es ist aber auch möglich, die Di- oder Polycarbonsäuren schon zu Beginn der Methylolierung zuzugeben. Weiterhin kann man sie auch während der Kondensation zugeben.

Wie schon erwähnt, erfolgt die Kondensation des methylolierten Harnstoffs im sauren Medium. Die Einstellung des geeigneten pH-Bereiches kann allein durch Zugabe der erfindungsgemäß verwendeten Di- oder Polycarbonsäuren erreicht werden. Gegebenenfalls kann der pH-Wert aber auch durch zusätzliche Zugabe von Ameisensäure oder von Mineralsäuren wie Schwefelsäure abgesenkt werden, so z.B. für den Fall, daß die Di- oder Polycarbonsäure bereits in der Methylolierungsstufe zugesetzt wurde.

Die Kondensation wird üblicherweise bei Temperaturen von 70 bis 100, vorzugsweise von 80 bis 95°C durchgeführt. Üblicherweise arbeitet man bei Normaldruck.

Der Endpunkt der Kondensation kann über die Trübungstemperatur (sogenannter Trübungspunkt) bestimmt werden, wobei die Temperatur bestimmt wird, bei der eine Lösung von 1 g Reaktionsgemisch in 5 g Wasser trübe wird. Im allgemeinen kondensiert man so lange, daß die Trübungstemperatur im Bereich von 10 bis 50, vorzugsweise von 25 bis 35°C, liegt.

Wenn der gewünschte Kondensationsgrad erreicht ist, stoppt man die Reaktion durch Zugabe einer Base, beispielsweise wäßriger Natronlauge, wobei man das Reaktionsgemisch auf pH-Werte im Bereich von 7 bis 9, vorzugsweise von 7,5 bis 8,5, bringt.

Anschließend kann man noch Harnstoff in fester Form oder als wäßrige Lösung zugeben, um das gewünschte Molverhältnis Harnstoff/Formaldehyd zu erreichen. üblicherweise gibt man soviel Harnstoff zu, daß das Endmolverhältnis von Harnstoff zu Formaldehyd 1:1,45 bis 1:0,9, vorzugsweise 1:1,15 bis 1:1,00, beträgt.

Gegebenenfalls wird noch im Vakuum Wasser entfernt, um den gewünschten Feststoffgehalt einzustellen.

Die Herstellung der erfindungsgemäßen Harze kann sowohl kontinuierlich als auch diskontinuierlich, beispielsweise in einer Rührkesselkaskade, erfolgen.

Die so erhaltenen wäßrigen Harnstoff-Formaldehyd-Harze weisen bei Feststoffgehalten von 60 bis 75 Gew.-% Viskositäten im Bereich von 90 bis 2.000, vorzugsweise 90 bis 900 mPas (20°C) auf.

Die Bestimmung des Feststoffgehaltes erfolgt so, daß 1 g einer Harzprobe zwei Stunden bei 120°C im Trockenschrank getrocknet und anschließend gewogen wird.

Die erfindungsgemäßen Harze eignen sich hervorragend als Bindemittel zur Herstellung lignocellulosehaltiger Formkörper wie Spanplatten, Sperrholz oder Faserplatten.

Solche Formkörper lassen sich beispielsweise herstellen, indem man 5 bis 15 Gew.-% Bindemittel mit 85 bis 95 Gew.-% Holzspänen bei Temperaturen von 120 bis 250°C unter Druck verpresst. Zusätzlich können noch Härter wie Ammoniumchlorid, Ammoniumsulfat, Ammoniumnitrat, Ammoniumphosphate, Ameisensäure, Schwefelsäure oder Salzsäure mitverwendet werden. üblicherweise werden die Härter mit dem wäßrigen Bindemittel vermischt ("Leimflotte") und dann auf die Späne gesprüht.

Formkörper, die mit den erfindungsgemäßen wäßrigen Harnstoff-Formaldehyd-Harzen hergestellt werden, weisen gute mechanische Eigenschaften und eine niedrige Formaldehyd-Emission bei gleichzeitiger guter Wasserbeständigkeit auf.

Die in den nachstehenden Beispielen verwendeten wäßrigen Lösungen weisen folgende Konzentrationen auf:
- Harnstoff-Lösung: 68 Gew.-% Harnstoff
- Formaldehyd-Lösung: 40 Gew.-% Formaldehyd
- Natronlauge: 25 Gew.-% NaOH
- Ameisensäure-Lösung: 10 Gew.-% Ameisensäure

In den Beispielen 3 bis 7 werden folgende Polycarbonsäuren eingesetzt:

### Polycarbonsäure I:

In einem Reaktor wurden unter Stickstoffatmosphäre 250 g Cyclohexan, 20 g eines Emulgators, welcher durch Umsetzung von 1 mol Oleylglycidylether, 1 mol Glycerin bei 80°C in Gegenwart von BF₃-Phosphorsäure und anschließender Ethoxylierung mit 2 mol Ethylenoxid erhalten wird, und 20 g eines Reaktionsproduktes aus 1 mol C₁₃/C₁₅-Oxoalkohol mit 6 mol Ethylenoxid und 4 mol Propylenoxid vorgelegt und anschließend unter Rühren eine Mischung aus 236 g Wasser, 200 g Acrylsäure, 210 g 25 gew.-%iges Ammoniakwasser, 50 g einer 50 gew.-%igen wäßrigen Acrylamidlösung, 0,18 g Methylenbisacrylamid, 0,37 ml Ameisensäure und 0,18 g Nitriloessigsäure (pH ca. 8) zugesetzt.

Die Mischung wurde eine Stunde lang unter Rühren emulgiert und mit 0,375 ml einer 15 gew.-%igen wäßrigen Lösung von 2,2'-Azo-bis(2-methylpropionamidin)dihydrochlorid versetzt. Nach zweistündiger Polymerisation bei 50°C wurden nochmals 0,375 ml der wäßrigen Lösung von 2,2'-Azo-bis(2-methylpropionamidin)dihydrochlorid zugesetzt und die Mischung weitere zwei Stunden auf 55°C erhitzt. Nach dem Abkühlen wurde die Dispersion im Vakuum getrocknet.

### Polycarbonsäure II:

In einem Reaktor wurden 1.195 g eines C₂₀-C₂₄-Olefin-1-Gemisches (Gulftene 20-24 der Firma Gulf Chemical, USA) vorgelegt und unter Rühren in einem schwachen Stickstoffstrom auf 170°C erhitzt. Nach Erreichen der Temperatur fügte man gleichmäßig 392 g Maleinsäureanhydrid und separat davon 16 g Ditertiärbutylperoxid innerhalb von 6 Stunden bei 170°C zu. Anschließend wurde das Reaktionsgemisch noch 2 Stunden bei 170°C nacherhitzt, auf 90°C abgekühlt und innerhalb einer halben Stunde 320 g 50 gew.-%ige wäßrige Natronlauge und 3.900 g Wasser als Mischung zudosiert. Anschließend wurde noch 4 Stunden bei 90 bis 95°C nacherhitzt und dann der Feststoffgehalt durch Verdünnen mit Wasser auf 25 % eingestellt. Die Molmasse des nicht hydrolysierten Polymeren betrug ca. 5.000 g/mol.

### Polycarbonsäure III:

In einem Druckreaktor wurden 210,3 g Wasser, 230,7 g Maleinsäureanhydrid und 3,3 g 50 %ige phosphorige Säure vorgelegt. Anschließend wurde der Reaktor dicht verschlossen, 3 mal hintereinander mit 3 bar Stickstoff abgepreßt und wieder entspannt und anschließend auf 130°C erhitzt. Nun wurden bei 130°C innerhalb von 5 Stunden eine Mischung von 128 g Wasser und 281,5 g Acrylsäure und innerhalb von 6 Stunden eine Mischung von 73,2 g Wasser und 72,9 g 30 gew.-%igem wäßrigen Wasserstoffperoxid gleichmäßig zudosiert. Anschließend wurde noch 2 Stunden bei 130°C nacherhitzt, gekühlt, der Reaktor entspannt und der Feststoffgehalt der Lösung auf 50 % mit Wasser eingestellt.

### Polycarbonsäure IV:

In einem Reaktor wurden 650 g Wasser vorgelegt und in einem schwachen Stickstoffstrom auf 95°C erhitzt. Nun wurden getrennt voneinander 300 g Acrylsäure und eine Lösung von 3,5 g Natriumpersulfat in 50 g Wasser innerhalb von 3 Stunden bei 90°C gleichmäßig zudosiert. Anschließend wurde noch 2 Stunden bei 95 bis 100°C nacherhitzt und durch Zugabe von Wasser der Feststoffgehalt auf 10 % eingestellt.

### Beispiel 1

Eine Mischung aus 2.400 g Formaldehyd-Lösung und 1.336 g Harnstoff-Lösung wurde mit Natronlauge auf einen pH-Wert von 6,8 eingestellt und 15 min bei 80°C temperiert. Nach Zugabe von 5,6 g Citronensäure wurde so lange bei 80 bis 90°C kondensiert, bis eine Probe des Reaktionsgemisches eine Trübungstemperatur von 25°C aufwies. Anschließend wurde der pH-Wert des Reaktionsgemisches mit Natronlauge auf 9,2 eingestellt und dann 1.336 g Harnstoff-Lösung zugegeben. Danach wurden bei 60°C und 100 mbar 1.520 g Wasser aus dem Reaktionsgemisch entfernt.

Das so erhaltene wäßrige Harz wies eine Viskosität von 240 mPas (20°C) bei einem Feststoffgehalt von 67 Gew.-% auf.

### Beispiel 2

Eine Mischung aus 600 g Formaldehyd-Lösung, 1,7 g des Natriumsalzes der Adipinsäure und 334 g Harnstoff-Lösung wurde mit Natronlauge auf einen pH-Wert von 6,5 eingestellt und 15 min bei 80°C temperiert. Anschließend wurde der pH-Wert des Reaktionsgemisches durch Zugabe von Ameisensäure-Lösung auf 4,3 eingestellt und bei 80°C so lange kondensiert, bis eine Probe des Reaktionsgemisches eine Trübungstemperatur von 21°C aufwies. Dann wurde der pH-Wert mit Natronlauge auf 9,3 eingestellt, 343 g Harnstoff-Lösung zugegeben und bei 60°C und 100 mbar 380 g Wasser aus dem Reaktionsgemisch entfernt.

Das so erhaltene wäßrige Harz wies eine Viskosität von 95 mPas (20°C) bei einem Feststoffgehalt von 62,5 Gew.-% auf.

### Beispiel 3

Eine Mischung aus 2.400 g Formaldehyd-Lösung und 7 g Polycarbonsäure I wurde mit Natronlauge auf einen pH-Wert von 8,0 eingestellt und 15 min bei 80°C temperiert. Anschließend wurden 1.335 g Harnstoff-Lösung zugegeben und das Reaktionsgemisch weitere 15 min bei 80°C gehalten. Dann wurde mit Ameisensäure-Lösung der pH-Wert auf 5,1 eingestellt und ca. 60 min kondensiert bis eine Probe des Reaktionsgemisches eine Trübungstemperatur von 25°C aufwies. Durch Zugabe von Natronlauge wurde ein pH-Wert von 8,8 eingestellt und 1.336 g Harnstoff-Lösung zugegeben. Danach wurden bei 60°C und 100 mbar 1.520 g Wasser aus dem Reaktionsgemisch entfernt.

Das so erhaltene wäßrige Harz wies eine Viskosität von 400 mPas (20°C) bei einem Feststoffgehalt von 65,8 Gew.-% auf.

### Beispiel 4

Eine Mischung aus 2.400 g Formaldehyd-Lösung, 28 g einer 25 gew.-%igen wäßrigen Lösung der Polycarbonsäure II und 1.336 g Harnstoff-Lösung wurde mit Natronlauge auf einen pH-Wert von 6,2 eingestellt und 15 min bei 80°C temperiert. Dann wird mit Ameisensäure-Lösung der pH-Wert auf 4,1 gebracht und bei 80 bis 84°C so lange kondensiert, bis eine Probe des Reaktionsgemisches eine Trübungstemperatur von 25°C aufweist. Anschließend wird mit Natronlauge der pH-Wert auf 9,6 eingestellt, 1.336 g Harnstoff-Lösung zugegeben und bei 60°C und 100 mbar 1.520 g Wasser aus dem Reaktionsgemisch entfernt.

Das so erhaltene wäßrige Harz weist eine Viskosität von 160 mPas (20°C) bei einem Feststoffgehalt von 66,0 Gew.-% auf.

### Beispiel 5

Eine Mischung aus 2.400 g Formaldehyd-Lösung und 1.336 g Harnstoff-Lösung wurde mit Natronlauge auf einen pH-Wert von 6,6 eingestellt und 15 min bei 80°C temperiert. Anschließend wurden 56 g einer 50,5 gew.-%igen Lösung einer zu 20 % mit Natronlauge neutralisierten Polycarbonsäure III zugegeben und bei 80 bis 92°C so lange kondensiert, bis eine Probe des Reaktionsgemisches eine Trübungstemperatur von 25°C aufwies. Dann wurde der pH-Wert mit Natronlauge auf 7,5 eingestellt, 520 g Harnstoff-Lösung zugegeben und bei 60°C und 100 mbar 758 g Wasser aus dem Reaktionsgemisch entfernt. Nach einer weiteren Zugabe von 404 g Harnstoff-Lösung wurden wie oben 792 g Wasser entfernt und schließlich nach dem Abkühlen auf 20°C nochmals 412 g Harnstoff-Lösung zugegeben. Dann wurde der pH-Wert mit Natronlauge auf 8,5 eingestellt.

Das so erhaltene wäßrige Harz weist eine Viskosität von 285 mPas (20°C) bei einem Feststoffgehalt von 64,7 Gew.-% auf.

### Beispiel 6

Zu 480 g einer Mischung aus 50 Gew.-% Formaldehyd, 25 Gew.-% Harnstoff und 25 Gew.-% Wasser wurden 159 g Harnstoff-Lösung gegeben und die so entstandene Mischung 15 min bei 80°C temperiert. Anschließend wurden 3,5 g einer 50 gew.-%igen wäßrigen Lösung der Polycarbonsäure III zugegeben und bei einem pH-Wert von 4,3 so lange kondensiert, bis eine Probe des Reaktionsgemisches eine Trübungstemperatur von 31°C aufwies. Dann wurde der pH-Wert mit Natronlauge auf 7,9 eingestellt, 334 g Harnstoff-Lösung zugegeben und bei 60°C und 100 mbar 104 g Wasser aus dem Reaktionsgemisch entfernt.

Das so erhaltene wäßrige Harz weist eine Viskosität von 870 mPas (20°C) bei einem Feststoffgehalt von 65,5 Gew.-% auf.

### Beispiel 7

Eine Mischung aus 2.400 g Formaldehyd-Lösung und 1.336 g Harnstoff-Lösung wurde mit Natronlauge auf einen pH-Wert von 6,5 eingestellt und 15 min bei 80°C temperiert. Dann wurden 70 g einer 10 gew.-%igen wäßigen Lösung der Polycarbonsäure IV zugegeben und bei einem pH-Wert von 4,2 so lange kondensiert, bis eine Probe des Reaktionsgemisches eine Trübungstemperatur von 23°C aufwies. Danach wurde der pH-Wert des Reaktionsgemisches mit Natronlauge auf 8,2 eingestellt, 1.336 g Harnstoff-Lösung zugegeben und bei 60°C und 100 mbar 1.400 g Wasser entfernt.

Das so erhaltene wäßrige Harz weist eine Viskosität von 350 mPas (20°C) bei einem Feststoffgehalt von 66,1 Gew.-% auf.

### Beispiel 8

Eine Mischung aus 2.400 g der Formaldehydlösung und 1.336 g der Harnstofflösung wurden 21 g einer 50 gew.-%igen wäßrigen Lösung der Polycarbonsäure IV gegeben. Das Reaktionsgemisch wurde durch Zugabe von Natronlauge auf einen pH-Wert von 6,6 eingestellt und 15 min auf 80°C temperiert. Anschließend wurde mit Ameisensäurelösung ein pH-Wert von 4,4 eingestellt und bei 80 bis 92°C solange kondensiert, bis eine Probe der Harzlösung eine Trübungstemperatur von 25°C aufwies. Dann wurde mit Natronlauge ein pH-Wert von 7,3 eingestellt, 520 g der Harnstofflösung zugegeben und anschließend bei 100 mbar 758 g Wasser aus dem Reaktionsgemisch entfernt. Nach einer weiteren Zugabe von 404 g der Harnstofflösung wurden wie oben 792 g Wasser entfernt und nach dem Abkühlen auf 20°C nochmals 412 g Harnstofflösung zugegeben. Der pH-Wert wurde mit Natronlauge auf 8,5 eingestellt.

Das so erhaltene Leimharz wies eine Viskosität von 210 mPa·s (20°C) bei einem Feststoffgehalt von 64,5 Gew.-% auf.

### Beispiel 9

Eine Mischung aus 2.400 g der Formaldehydlösung und 1.336 g Harnstofflösung wurde mit Natronlauge auf einen pH-Wert von 6,6 eingestellt und 15 min bei 80°C temperiert. Anschließend wurden 21 g einer 50,5 gew.-%igen wäßrigen Lösung der Polycarbonsäure IV zugegeben und bei 80 bis 92°C solange kondensiert, bis eine Harzprobe eine Trübungstemperatur von 25°C aufwies. Anschließend wurde mit Natronlauge ein pH-Wert von 7,3 eingestellt, 520 g der Harnstofflösung zugegeben und bei 100 mbar 787 g Wasser aus dem Reaktionsgemisch entfernt. Nach einer weiteren Zugabe von 404 g Harnstofflösung wurden wie oben 763 g Wasser entfernt und schließlich nach dem Abkühlen auf 20°C nochmals 412 g Harnstofflösung zugegeben. Der pH-Wert wurde mit Natronlauge auf 8,5 eingestellt.

Das so erhaltene Leimharz wies eine Viskosität von 240 mPa·s (20°C) bei einem Feststoffgehalt von 65,5 Gew.-% auf.

### Beispiel 10

Eine Mischung aus 2.400 g Formaldehydlösung und 1.336 g Harnstofflösung wurde mit Natronlauge auf einen pH-Wert von 6,7 eingestellt und 15 min bei 80°C temperiert. Anschließend wurde mit Ameisensäurelösung ein pH-Wert von 4,2 eingestellt und bei 80 bis 92°C solange kondensiert, bis eine Harzprobe eine Trübungstemperatur von 25°C aufwies. Dann wurde soviel Natriumsalz der Polycarbonsäure IV zugegeben, daß der pH-Wert des Reaktionsgemisches auf 9,3 eingestellt wurde. Danach wurden 472 g Harnstofflösung zugegeben und bei 100 mbar 760 g Wasser aus dem Reaktionsgemisch entfernt. Nach einer weiteren Zugabe von 432 g Harnstofflösung wurden wie oben 790 g Wasser entfernt und nach dem Abkühlen auf 20°C nochmals 432 g der Harnstofflösung zugegeben. Der pH-Wert wurde mit Natronlauge auf 8,5 eingestellt.

Das so erhaltene Leimharz wies eine Viskosität von 175 mPa·s (20°C) bei einem Feststoffgehalt von 63,9 Gew.-% auf.

### Beispiel 11

Eine Mischung aus 2.400 g Formaldehydlösung und 1.336 g Harnstofflösung wurde mit Natronlauge auf einen pH-Wert von 6,7 eingestellt und 15 min bei 80°C temperiert. Anschließend wurde mit Ameisensäurelösung ein pH-Wert von 4,2 eingestellt und solange bei 80 bis 92°C kondensiert, bis eine Harzprobe eine Trübungstemperatur von 25°C aufwies. Dann wurde mit Natronlauge ein pH-Wert von 9,3 eingestellt, 520 g Harnstofflösung zugegeben und bei 100 mbar 793 g Wasser aus dem Reaktionsgemisch entfernt. Nach einer weiteren Zugabe von 404 g Harnstofflösung wurde wie oben 757 g Wasser entfernt und schließlich nach dem Abkühlen auf 20°C nochmals 412 g Harnstofflösung zugegeben. Danach wurde durch Zugabe von Natriumsalz der Polycarbonsäure IV der pH-Wert des Harzes auf 8,5 eingestellt.

Das so erhaltene Leimharz wies eine Viskosität von 170 mPa·s (20°C) bei einem Feststoffgehalt von 64,3 Gew.-% auf.

### Vergleichsbeispiel 1

Eine Mischung aus 2.400 g Formaldehyd-Lösung und 1.336 g Harnstoff-Lösung wurde mit Natronlauge auf einen pH-Wert von 6,8 eingestellt und 15 min bei 80°C temperiert. Dann wurde mit Ameisensäure-Lösung ein pH-Wert von 4,5 eingestellt und bei 80 bis 90°C so lange kondensiert, bis eine Probe des Reaktionsgemisches eine Trübungstemperatur von 25°C aufwies. Durch Zugabe von Natronlauge wurde der pH-Wert auf 9,6 gebracht und 1.336 g Harnstoff-Lösung zugegeben. Anschließend wurden bei 60°C und 100 mbar 1.520 g Wasser aus dem Reaktionsgemisch entfernt.

Das so erhaltene wäßrige Harz weist eine Viskosität von 195 mPas (20°C) bei einem Feststoffgehalt von 65,0 Gew.-% auf.

### Herstellung und Prüfung von Spanplatten

Mit den oben beschriebenen wäßrigen Harzen wurden Leimflotten hergestellt, die einen Festharzgehalt von 58,7 Gew.-% hatten. Als Härter wurde 20 gew.-%ige wäßrige Ammoniumsulfatlösung verwendet, die den Leimflotten in Mengen von 10 Gew.-%, gezogen auf die Festharzmenge, zugegeben wurde.

Es wurden Fichtenholzspäne verwendet, die so beleimt wurden, daß der Festharzgehalt, bezogen auf atro Späne, 6 Gew.-% betrug. Die beleimten Späne wiesen eine Spanfeuchte von ca. 10 Gew.-% auf.

Die Herstellung der Spanplatten erfolgte bei einer Preßtemperatur von 180°C mit einer Preßzeit von 165 Sekunden. Die Plattendicke (geschliffen) betrug 18,1 mm, die Dichte ca. 670 kg/m³.

Die Versuchsdaten sind der nachstehenden Tabelle zu entnehmen.

| Beispiel Nr. | 1 | 3 | 4 | 5 | 7 | 8 | 9 | 10 | 11 | Vergl. bsp.1 |
|---|---|---|---|---|---|---|---|---|---|---|
| Gelierzeit bei 100°C [s] | 59 | 52 | 50 | 54 | 45 | 61 | 58 | 48 | 51 | 44 |
| Scherfestigkeit [N/mm²] | 2,05 | 1,86 | 1,95 | 2,02 | 2,06 | 2,15 | 2,07 | 1,99 | 2 | 1,67 |
| Querzugfestigkeit ¹⁾ [N/mm²] | 0,59 | 0,49 | 0,54 | 0,54 | 0,53 | 0,61 | 0,58 | 0,56 | 0,54 | 0,45 |
| Quellwert nach 24 h ²⁾ [%] | 29,4 | 31,7 | 30,7 | 32,4 | 29,5 | 29,9 | 30,4 | 32,1 | 32,4 | 34,1 |
| Perforatorwert ³⁾ [mg Formaldehyd pro 100 g atro Platte] | 8,2 | 9,7 | 8,1 | 8,7 | 9,9 | 8,7 | 8,6 | 8,4 | 8,7 | 9,7 |

| | | | | | | | | | | |
|---|---|---|---|---|---|---|---|---|---|---|
| ¹⁾ nach DIN 52 365 | | | | | | | | | | |
| ²⁾ nach DIN 52 364 | | | | | | | | | | |
| ³⁾ nach DIN EN 120 | | | | | | | | | | |

## Patentansprüche

1. Wäßrige Harnstoff-Formaldehyd-Harze, erhältlich durch Methylolierung des Harnstoffs und anschließende Kondensation, wobei die Methylolierung und Kondensation oder nur die Kondensation in Gegenwart von 0,05 bis 2 Gew.-%, bezogen auf die Gesamtmenge an eingesetztem Harnstoff und Formaldehyd, von Di- oder Polycarbonsäuren, welche teilweise oder vollständig neutralisiert sein können, durchgeführt wird.

2. Wäßrige Harnstoff-Formaldehyd-Harze nach Anspruch 1, erhältlich durch Methylolierung oder Kondensation in Gegenwart von aliphatischen Di- oder Polycarbonsäuren mit 4 bis 14 C-Atomen.

3. Wäßrige Harnstoff-Formaldehyd-Harze nach Anspruch 1, erhältlich durch Methylolierung oder Kondensation in Gegenwart von polymeren Polycarbonsäuren auf Basis von monoolefinisch ungesättigten C₃-C₅-Carbonsäuren, deren mittleres Molekulargewicht Mₙ 1.000 bis 200.000 beträgt.

4. Verfahren zur Herstellung von wäßrigen Harnstoff-Formaldehyd-Harzen gemäß Anspruch 1, durch Kondensation von Harnstoff und Formaldehyd im sauren Medium, dadurch gekennzeichnet, daß man die Kondensation in Gegenwart von 0,05 bis 2 Gew.-% Di- oder Polycarbonsäuren, welche vollständig oder teilweise neutralisiert sein können, durchführt.

5. Verwendung der wäßrigen Harnstoff-Formaldehyd-Harze gemäß einem der Ansprüche 1 bis 4 als Bindemittel bei der Herstellung von Formkörpern aus lignocellulosehaltigen Materialien.

6. Formkörper aus lignocellulosehaltigen Materialen, erhältlich unter Verwendung eines wäßrigen Harnstoff-Formaldehyd-Harzes gemäß einem der Ansprüche 1 bis 4 als Bindemittel.

## Claims

1. An aqueous urea-formaldehyde resin obtainable by methylolation of the urea and subsequent condensation, wherein the methylolation and condensation or only the condensation is carried out in the presence of from 0.05 to 2% by weight, based on the total amount of urea and formaldehyde used, of dicarboxylic or polycarboxylic acids which can be partially or completely neutralized.

2. An aqueous urea-formaldehyde resin as claimed in claim 1 obtainable by methylolation or condensation in the presence of aliphatic dicarboxylic or polycarboxylic acids having from 4 to 14 carbon atoms.

3. An aqueous urea-formaldehyde resin as claimed in claim 1 obtainable by methylolation or condensation in the presence of polymeric polycarboxylic acids based on monoolefinically unsaturated C₃-C₅-carboxylic acids whose mean molecular weight Mₙ is from 1,000 to 200,000.

4. A process for preparing aqueous urea-formaldehyde resins as claimed in claim 1 by condensation of urea and formaldehyde in acid medium, wherein the condensation is carried out in the presence of from 0.05 to 2% by weight of dicarboxylic or polycarboxylic acids which can be completely or partially neutralized.

5. Use of an aqueous urea-formaldehyde resin as claimed in any of claims 1 to 4 as binder in the production of moldings of lignocellulosic materials.

6. A molding of lignocellulosic materials obtainable using an aqueous urea-formaldehyde resin as claimed in any of claims 1 to 4 as binder.

## Revendications

1. Résines urée-formaldéhyde aqueuses, obtenues par méthylolation de l'urée suivie de condensation, la méthylolation et la condensation ou la condensation seulement étant conduites en présence de 0,05 à 2% en poids, par rapport à la quantité totale d'urée et de formaldéhyde mis en réaction, d'acides di- ou polycarboxyliques qui peuvent être neutralisés partiellement ou complètement.

2. Résines urée-formaldéhyde aqueuses selon la revendication 1, obtenues par méthylolation ou condensation en présence d'acides di- ou polycarboxyliques aliphatiques à 4-14 atomes de carbone.

3. Résines urée-formaldéhyde aqueuses selon la revendication 1, obtenues par méthylolation ou condensation en présence d'acides polycarboxyliques polymères à base d'acides carboxyliques en C₃-C₅ à insaturation monooléfinique, dont le poids moléculaire moyen Mₙ est compris entre 1000 et 200 000.

4. Procédé de préparation de résines urée-formaldéhyde aqueuses selon la revendication 1, par condensation d'urée et de formaldéhyde en milieu acide, caractérisé en ce que l'on conduit la condensation en présence de 0,05 à 2% en poids d'acides di- ou polycarboxyliques qui peuvent être neutralisés partiellement ou complètement.

5. Utilisation des résines urée-formaldéhyde aqueuses selon l'une quelconque des revendications 1 à 4 comme liant dans la fabrication de corps moulés en matières contenant de la lignocellulose.

6. Corps moulés en matières contenant de la lignocellulose, obtenus en utilisant, comme liant, une résine urée-formaldéhyde aqueuse selon l'une quelconque des revendications 1 à 4.
